# EUROPÄISCHE PATENTANMELDUNG

(11) **EP 1 413 715 A1**
(43) Veröffentlichungstag der Anmeldung: **28.04.2004**
(21) Anmeldenummer: 02023474.6
(22) Anmeldetag: 21.10.2002
(51) Int. Cl.: F01D 11/00

(54) **Prallkühlung der Plattform einer Gasturbinenlaufschaufel**

(71) Anmelder: SIEMENS AKTIENGESELLSCHAFT, 80333 München (DE)
(72) Erfinder: Tiemann, Peter, 58452 Witten (DE)

(57) **Zusammenfassung**

Die Erfindung betrifft eine Turbine (1) mit einem drehgelagerten rotationssymmetrischen Rotor(4), der an seinem Außenumfang in gleichem Winkelabstand zueinander quer zum Außenumfang verlaufende Laufschaufelhaltenuten umfasst, mit einer Laufschaufel (13), die einen Flügel (24) und einen zu der Laufschaufelhaltenut (19) korrespondierenden Laufschaufelfuß (19) aufweist, welcher in eine der Laufschaufelhaltenuten (18) eingesteckt ist, wobei zwischen dem Laufschaufelfuß (19) und dem Flügel (24) eine Plattform (23) angeordnet ist, die sich quer zum Laufschaufelfuß (19) erstreckt, wobei zwischen je zwei unmittelbar benachbarten Laufschaufeln (13) je ein Prallkühlelement (22) zwischen ihren Plattformen (23) und dem Rotor (4) angeordnet ist, welches von einem Kühlfluid zur Prallkühlung der Plattform (23) durchströmbar ist. Es wird vorgeschlagen, dass die Prallkühlelemente 22 jeweils aus zwei unabhängig voneinander beweglichen Hälften 20, 21 gebildet und Mittel vorgesehen sind, durch welche die beiden Hälften 20, 21 der Prallkühlelemente 22 aufgrund der wirkenden Fliehkräfte beim Turbinenbetrieb selbsttätig dicht aneinander gedrückt werden.

Bezugszeichenliste

- 1: Gasturbine
- 2: Gehäuse
- 3: Rotationsachse
- 4: Rotor
- 5: Kühlluft
- 6: Verdichter
- 7: Ringbrennkammer
- 8: Brenner
- 9: Heißgas
- 10: Heißgaskanal
- 11: Turbinenstufe
- 12: Leitschaufel
- 13: Laufschaufel
- 14: Längsachse
- 15: Tangente
- 16: Turbinenscheibe
- 17: Wellenabsatz
- 18: Laufschaufelhaltenut
- 19: Laufschaufelfuß
- 20: linke Hälfte eines Prallkühlelements
- 21: rechte Hälfte eines Prallkühlelements
- 22: Prallkühlelement
- 23: Plattform
- 24: Flügel
- 25: Plattformunterseite
- 26: vorderer Bereich
- 27: hinterer Bereich
- 28: vorderer Steg
- 29: hinterer Steg
- 30: seitlicher Plattformrand
- 31: Anlagegleitfläche
- 32: Gleitmittel
- 33: Anlagegleitfläche
- 34: Prallkühlblech
- 35: Prallkühlöffnung
- 36: Gleitmittel

## Beschreibung

Die Erfindung betrifft eine Turbine, insbesondere eine Gasturbine zur Energieerzeugung durch Verbrennung eines Brennmittel-Luftgemisches zu einem Heißgas, gemäß dem Oberbegriff des Anspruchs 1.

Allgemein bekannt sind Gasturbinen, bei denen in einem ringförmigen Heißgaskanal ein heißes Arbeitsmedium an Flügeln von Laufschaufeln vorbeiströmt. Diese sind dabei jeweils als Ring an dem Außenumfang einer Turbinenscheibe angeordnet, die auf dem Rotor der Gasturbine sitzt. Zur Befestigung an der Turbinenscheibe weist jede Laufschaufel einen tannenbaumförmigen Laufschaufelfuß auf, der in eine korrespondierende quer zum Außenumfang der Turbinenscheibe verlaufende Laufschaufelhaltenut einschiebbar ist. Zwischen den Flügeln der Laufschaufeln und den mit der Turbinenscheibe verbundenen Laufschaufelfüßen sind an den Laufschaufeln quer verlaufende Plattformen angeordnet, die den Heißgaskanal an seiner radial innenliegenden Seite begrenzen. Zum Widerstehen der thermischen Belastungen wird neben dem Flügel einer Laufschaufel auch die Plattform mit einem Kühlfluid beaufschlagt.

Aufgabe der vorliegenden Erfindung ist die Angabe einer Laufschaufel und einer Turbine.

Die auf die Turbine bezogene Aufgabe wird erfindungsgemäß durch die Merkmale des Anspruchs 1 gelöst. Vorteilhafte Ausgestaltungen der Turbine sind in den Unteransprüchen gegeben.

Die Lösung sieht vor, dass die Prallkühlelemente jeweils aus zwei unabhängig voneinander beweglichen Hälften gebildet und Mittel vorgesehen sind, durch welche die beiden Hälften der Prallkühlelemente aufgrund der wirkenden Fliehkräfte beim Turbinenbetrieb selbsttätig dicht aneinander gedrückt werden. Die Aufteilung des zwischen zwei unmittelbar benachbarten Laufschaufeln angeordneten Prallkühlelements in zwei unabhängigen Hälften ermöglicht es, dass jede Laufschaufel einzeln mit jeweils einer links und rechts des Laufschaufelfußes angeordneten Hälfte in die Laufschaufelhaltenut einsteckbar ist. Der zwischen den beweglichen Hälften gegebenenfalls bestehende Spalt wird beim Turbinenbetrieb selbsttätig dicht geschlossen, indem die wirkenden Fliehkräfte aufgrund der vorgesehenen Mittel die beiden Hälften gegenseitig aneinander drücken.

Üblicherweise wurde bisher ein einstückiges Prallkühlelement zwischen zwei unmittelbar benachbarten Plattformunterseiten fixiert angeordnet. Zur fixen Anlage dieser Prallkühlelemente wiesen die Plattformunterseiten in Umfangrichtung der Turbinenscheibe verlaufende Anschläge im Bereich der beiden Stirnseiten der Laufschaufelfüße auf. Die sich in Umfangsrichtung erstreckenden Anschläge für die Prallkühlelemente verliefen dabei quer zur Ausrichtung der Laufschaufelhaltenuten. Somit musste das Bestücken der Turbinenscheibe mit den Laufschaufeln und den Prallkühlelementen gleichzeitig erfolgen. Alle Laufschaufeln eines Rings wurden zuerst etwas in ihre Laufschaufelhaltenuten eingesteckt, anschließend wurden alle Prallkühlelemente unterhalb der Plattformen hinzugefügt, um dann alle Laufschaufeln zusammen mit den Prallkühlelementen gleichzeitig vollständig in die Laufschaufelhaltenuten zu schieben. Mit der Erfindung entfällt diese umständliche und zeitintensive Montage und Demontage von Laufschaufeln.

In einer vorteilhaften Ausgestaltung umfassen die Mittel zum Aneinanderdrücken der Hälften geneigte Anlagegleitflächen an der dem Laufschaufelfuß zugewandten Plattformunterseite, an denen während des Turbinenbetriebs an den Hälften analog angeordnete Gleitmittel anliegen. Die Neigungen sind derart gewählt, dass die Hälften unter Fliehkrafteinwirkung aneinander gedrückt werden. Ein sich so zwischen den beiden aneinanderliegenden Hälften befindlicher Spalt wird dann dicht geschlossen.

Vorzugsweise sind die Gleitmittel als Gleitflächen ausgebildet, die somit mit den Anlagegleitflächen einen dichten Kurvenzug bilden.

In einer weiteren vorteilhaften Ausgestaltung werden Leckageverluste von Kühlfluid reduziert, wenn die Anlagegleitflächen und die Gleitmittel im Anlagebereich einen nahezu geschlossenen dichten Kurvenzug bilden. Das Kühlfluid strömt folglich im Turbinenbetrieb nahezu vollständig durch das Prallkühlelement.

Bevorzugtermaßen weist der sich in Einsteckrichtung erstreckende Laufschaufelfuß einen vorderen und einen hinteren Bereich auf, in denen an der Plattformunterseite als geneigte Anlagegleitfläche jeweils ein sich radial nach innen auskragender Steg angeordnet ist, der vom Laufschaufelfuß weg sich mit vermindernder Steghöhe zum Plattformrand hin erstreckt. Somit werden an der Anlagegleitfläche anliegende Hälften unter Fliehkrafteinwirkung zueinander bewegt.

Nach einer vorteilhaften Weiterbildung, die entlang des Laufschaufelfußes an der Plattform angrenzend eine schräg zur Längsachse angeordnete Ebene als geneigte Anlagegleitfläche aufweist, wird eine identische Wirkung erzielt.

Eine einfache dichtende Anordnung ist gegeben, wenn die beiden Hälften der Prallkühlelemente jeweils eine Anlagefläche umfassen, die der gegenüberliegenden Hälfte zugewandt ist und die unter Fliehkrafteinwirkung dicht aneinander liegen.

Die auf die Laufschaufel bezogene Aufgabe wird erfindungsgemäß gelöst durch die Merkmale des Anspruchs 8. Weitere vorteilhafte Ausgestaltungen der Laufschaufel sind in den daran folgenden Unteransprüchen angegeben.

Die Laufschaufel weist auf ihrer dem Laufschaufelfuß zugewandten Plattformunterseite eine bewegliche Hälfte eines Prallkühlelements auf. Während des Betriebes der Turbine bewirkt die Fliehkrafteinwirkung, dass sich die bewegliche Hälfte in einer definierten Lage an der Plattformunterseite befindet. Ein zwischen Hälfte und Laufschaufel befindliches Spiel erleichtert den Einbau beider Elemente in den Rotor einer Turbine. Zusätzlich erzeugt die Aufteilung in des Prallkühlelements in Hälften, dass Laufschaufeln eines Ringes einzeln getauscht werden können, ohne das alle Laufschaufeln gleichzeitig entnommen werden müssen, wie es bisher der Fall war.

In einer vorteilhaften Ausbildung weist die Laufschaufel beiderseits des Laufschaufelfußes eine Hälfte auf. Somit kann eine hinreichende Kühlung beider Seiten der Plattform erzielt werden. Das Prallkühlelement ist somit aus zwei aneinanderliegenden Hälften zweier benachbarter Laufschaufeln gebildet.

Bevorzugtermaßen umfassen der Laufschaufelfuß und/oder die Plattformunterseite geneigte Anlagegleitflächen, an denen Gleitmittel einer Hälfte unter Fliehkrafteinwirkung dicht anliegen. An den Anlagegleitflächen verschiebt sich die Hälfte unter Einwirkung der beim Turbinenbetrieb auftretenden Fliehkraft in ihre Betriebsposition. Dabei liegt die Hälfte dicht an der Plattformunterseite an, so dass Leckageverluste werden folglich verringert.

Als besonders vorteilhaft hat sich die Weiterbildung herausgestellt, bei der die Neigung der Anlagegleitflächen derartig ist, dass unter Fliehkrafteinwirkung die Hälfte von Laufschaufelfuß weg strebt. Unmittelbar benachbarte bewegliche Hälften zweier unmittelbar benachbarter Laufschaufeln werden somit unter Fliehkrafteinwirkung aneinander gedrückt, so dass ein sich zwischen ihnen gegebenenfalls befindlicher Spalt dicht geschlossen wird.

Die Erfindung wird nachfolgend anhand einer Zeichnung beschrieben. Es zeigen:
- Fig. 1: zeigt einen teilgeschnittene Seitenansicht durch eine Gasturbine,
- Fig. 2: einen sektorförmigen Ausschnitt einer Turbinenscheibe mit tannenbaumförmigen Laufschaufelhaltenuten und
- Fig. 3: eine Laufschaufel mit beidseitig angeordneten Hälften.

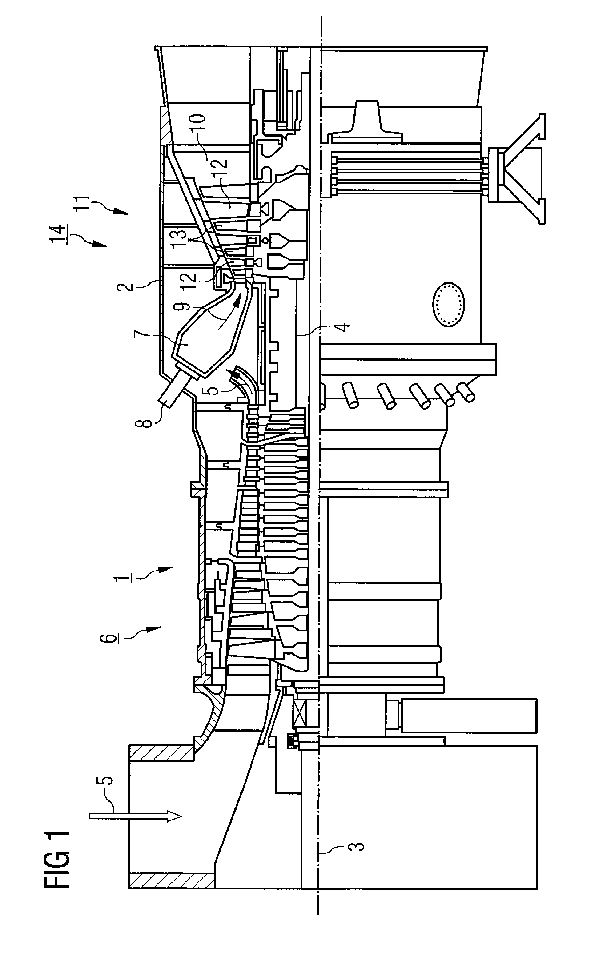

Fig. 1 zeigt eine teilgeschnittene Seitenansicht einer Gasturbine 1 als schematische Darstellung. Die Gasturbine 1 weist ein Gehäuse 2 auf, indem ein um die Rotationsachse 3 drehbar gelagerter Rotor 4angeordnet ist. Eine Ansaugkammer 4a befindet sich bezogen auf Fig. 1 auf der linken Rotorseite, der ein von Kühlluft 5 durchströmter Verdichter 6 folgt, der die Kühlluft 5 angesaugt und verdichtet. Dem Verdichter 6 räumlich nachgeschaltet ist eine Ringbrennkammer 7, die an ihrem äußeren Ende einen Brenner 8 aufweist. Im Brenner 8 wird die verdichtete Kühlluft 5 des Verdichters 6 mit einem Brennmittel vermischt und im Brennraum der Ringbrennkammer 7 zu einem Heißgas 9 verbrannt. Das Heißgas 9 strömt entlang eines sich anschließenden ringförmgen Heißgaskanals 10 vorbei an mehreren Turbinenstufen 11, die dabei jeweils aus einem im Heißgaskanal 10 angeordneten Leitschaufelring gebildet sind, dem jeweils ein Laufschaufelring nachfolgt. Die Leitschaufeln 12 des Leitschaufelrings sind am Gehäuse 2 der Gasturbine 1 befestigt, die Laufschaufeln 13 des Laufschaufelrings an einer fest am Rotor 4 aufgesteckten ringförmigen Turbinenscheibe 16.

Mittels der Laufschaufeln 13 wird die Energie des Heißgases 9 in eine Rotationsenergie des Rotors 4 umgewandelt. Der Rotor 4 treibt einen nicht dargestellten Generator an. Darüberhinaus wird auch der Verdichter 6 vom Rotor 4 angetrieben.

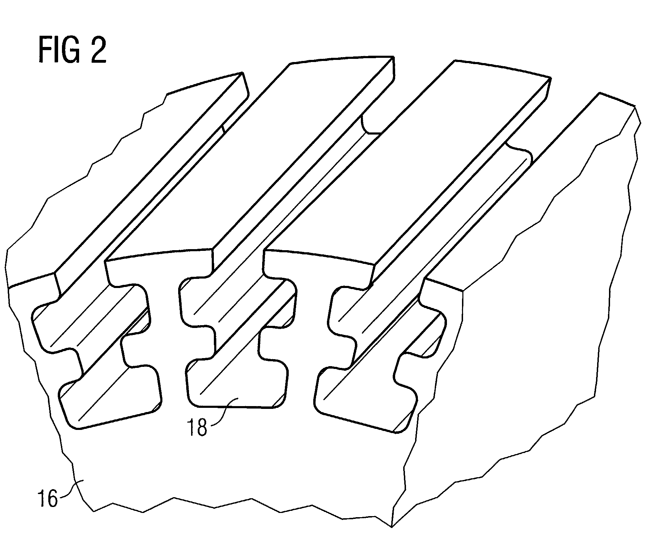

Fig. 2 zeigt einen sektorförmigen Ausschnitt der Turbinenscheibe 16, die einen koaxialen Wellenabsatz 17 bildet. Die in Radialrichtung ausgebildete Laufschaufelhaltenut 18 ist im Querschnitt tannenbaumförmig und verläuft quer zum Außenumfang. In die Laufschaufelhaltenuten 18 sind Laufschaufeln 13 einsteckbar, die hierzu einen zur Laufschaufelhaltenut 18 korrespondierenden Laufschaufelfuß 19 aufweisen.

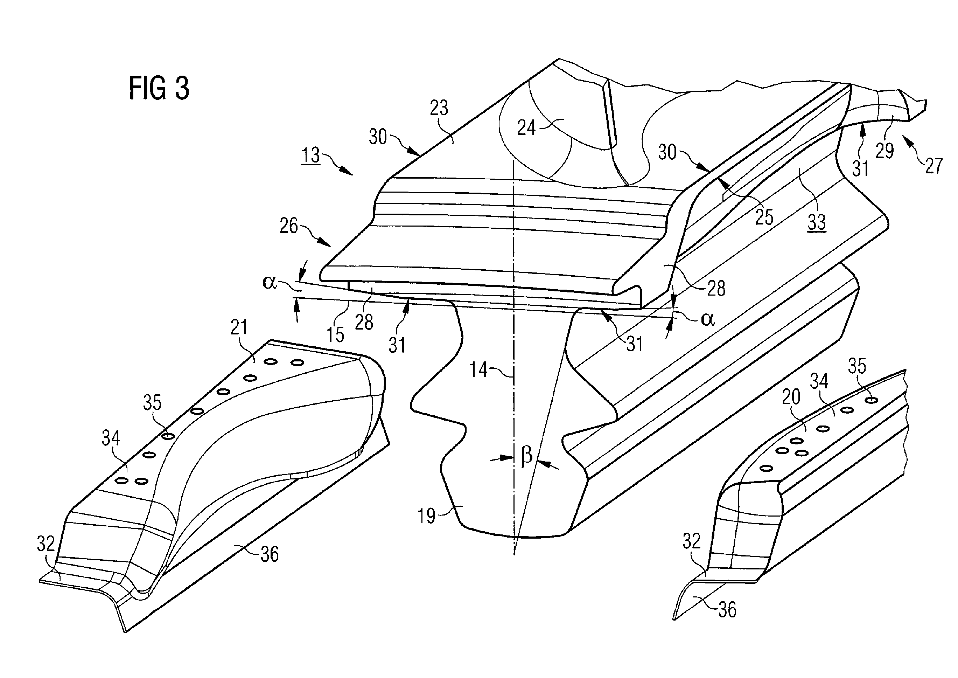

Fig. 3 zeigt in einer perspektivischen Darstellung eine Laufschaufel 13 mit beidseitig vom Laufschaufelfuß 19 angeordneten Prallkühlelementen 22, die jeweils aus zwei Hälften 20, 21 gebildet sind, wobei in Fig. 3 auf beiden Seiten des Laufschaufelfußes 19 jeweils nur eine Hälfte 20, 21 dargestellt ist. So ist rechts des Laufschaufelfußes 19 unterhalb der rechten Seite einer Plattform 23 die linke Hälfte 20 des Prallkühlelements 22 und links des Laufschaufelfußes 19 unterhalb der linken Seite der Plattform 23 die rechte Hälfte 21 des Prallkühlelements 22 gezeigt. Die Laufschaufel 13 weist entlang ihrer radial verlaufenden Längsachse 14 ihren Laufschaufelfuß 19, die quer dazu verlaufende Plattform 23 und einen Flügel 24 auf.

An der radial innen liegende Plattformunterseite 25 sind im vorderen Bereich 26 und im hinteren Bereich 27 jeweils radial nach innen auskragende Stege 28, 29 ausgebildet. Diese erstrecken sich vom Laufschaufelfuß 19 in Richtung des seitlichen Plattformrands 30. Die Stege 28, 29 sind dabei derart geneigt, dass sich ihre auskragende Höhe vom Laufschaufelfuß 19 zum Plattformrand 30 hin reduziert. Somit bildet eine senkrecht zur Längsachse 14 und zum Radius des Rotors 4 angeordnete Tangente 15 mit den zum Plattformrand 30 hin verlaufenden Stegen 28, 29 jeweils einen spitzen Winkel α. Die der Turbinenscheibe 16 zugewandten Seiten der Stege 28, 29 sind als Anlagegleitflächen 31 ausgebildet.

Eine weitere Anlagegleitfläche 33 verläuft entlang des Laufschaufelfußes 19 zwischen diesem und der Plattformunterseite 25. Dabei bildet die Anlagegleitfläche 33 mit der Längsachse 14 ebenfalls einen spitzen Winkel β.

Die in Fig. 3 nicht sichtbare Seite des Laufschaufelfußes 19 ist in gleicher Art und Weise ausgebildet.

Die beiden Hälften 20, 21 umfassen jeweils Gleitmittel 32, 36 und ein mit hier nur schematisch dargestellten Prallkühlöffnungen 35 versehenes Prallkühlblech 34. Die Gleitmittel 32, 36 sind am äußeren Umfang der Hälften 20, 21 als Gleitflächen angeordnet.

Die in Fig. 3 links der Laufschaufel 13 dargestellte rechte Hälfte 21 des Prallkühlelements 22 ist annähernd seitenverkehrt zur linken Hälfte 20 ausgebildet.

Im montierten Zustand liegen die Elemente 13, 20, 21 aneinander. Die Prallkühlbleche 34 ragen in die Ausnehmungen hinein, die an der Plattformunterseite 15 zwischen den jeweils vorderen Steg 28 und hinteren Steg 29 gebildet sind. Die Gleitmittel 32, 36 der Hälften 20, 21 liegen dann an den Anlagegleitflächen 31, 33 der Laufschaufel 13 an, wobei die Prallkühlbleche 34 jeweils dem Verlauf der Plattformunterseite 25 beabstandet folgt.

Während des Betriebs der Gasturbine 1 dreht sich der Rotor 4 und mit ihm die auf den Turbinenscheiben 16 befindlichen Laufschaufeln 13. Die auf die beiden sich jeweils unter einer Plattform 23 zweier benachbarter Laufschaufeln 13 befindenden Hälften 20, 21 wirkenden Fliehkräfte drücken diese radial nach außen. Die Stege 28, 29 wirken als Anlagegleitflächen 31 für die beweglich angeordneten Hälften 20, 21. Aufgrund der Neigung der Stege 28, 29 bewegen sich die Hälften 20, 21 eines Prallkühlelementes 22 jeweils zum seitlichen Plattformrand 30 hin und somit aufeinander zu.

Die Anlagegleitflächen 33 unterstützen diese Bewegung der Hälften 20, 21. Unter Fliehkrafteinwirkung gleiten deren Gleitmittel 26 radial nach außen und verschieben somit die Hälften 20, 21 ebenfalls jeweils vom Laufschaufelfuß 19 weg.

Im Turbinenbetrieb liegen somit die beiden ein Paar bildende Hälften 20, 21 eines Prallkühlelements 22 dicht aneinander an. Zwei Plattformunterseiten 25 zweier unmittelbar benachbarter Laufschaufeln 13 sind somit durch einen annährend geschlossenen Kurvenzug von einer Kühlmittelversorgung getrennt, so dass das eingesetzte Kühlmittel im wesentlichen nur durch die Prallkühlöffnungen 35 zu den Plattformen 23 strömen kann. Leckageverluste werden so weitgehend vermieden.

Der geschlossenen Kurvenzug verläuft dabei entlang der Anlagegleitflächen 31, 36 zweier benachbarter Laufschaufeln 13, an denen die beiden dicht aneinander anliegenden Hälften 20, 21 eines Prallkühlelements 22 ebenfalls dicht mit ihren Gleitmitteln 32, 36 anliegen.

## Patentansprüche

1. Turbine (1)
mit einem drehgelagerten rotationssymmetrischen Rotor(4), der an seinem Außenumfang in gleichem Winkelabstand zueinander quer zum Außenumfang verlaufende Laufschaufelhaltenuten umfasst,
mit einer Laufschaufel (13), die einen Flügel (24) und einen zu der Laufschaufelhaltenut (19) korrespondierenden Laufschaufelfuß (19) aufweist, welcher in eine der Laufschaufelhaltenuten (18) eingesteckt ist,
wobei zwischen dem Laufschaufelfuß (19) und dem Flügel (24) eine Plattform (23) angeordnet ist, die sich quer zum Laufschaufelfuß (19) erstreckt,
wobei zwischen je zwei unmittelbar benachbarten Laufschaufeln (13) je ein Prallkühlelement (22) zwischen ihren Plattformen (23) und dem Rotor (4) angeordnet ist, welches von einem Kühlfluid zur Prallkühlung der Plattform (23) durchströmbar ist,
**dadurch gekennzeichnet,**
**dass** die Prallkühlelemente (22) jeweils aus zwei unabhängig voneinander beweglichen Hälften (20, 21) gebildet und Mittel vorgesehen sind, durch welche die beiden Hälften (20, 21) der Prallkühlelemente (22) aufgrund der wirkenden Fliehkräfte beim Turbinenbetrieb selbsttätig dicht aneinander gedrückt werden.

2. Turbine (1) nach Anspruch 1,
**dadurch gekennzeichnet,**
**dass** die Mittel zum Aneinanderdrücken der Hälften (20, 21) geneigte Anlagegleitflächen (31) an der dem Laufschaufelfuß (19) zugewandten Plattformunterseite (25) umfassen, an denen während des Turbinenbetriebes an den Hälften (20, 21) analog angeordnete Gleitmittel (32) anliegen,
wobei die Neigungen derart gewählt sind, dass die Hälften (20, 21) unter Fliehkrafteinwirkung aneinander gedrückt werden.

3. Turbine (1) nach Anspruch 2
**dadurch gekennzeichnet,**
**dass** die Gleitmittel (32) als Gleitflächen ausgebildet sind.

4. Turbine (1) nach einen der Ansprüche 2 bis 3
**dadurch gekennzeichnet,**
**dass** die Anlagegleitflächen (31) und die Gleitmittel (32) im Anlagebereich einen nahezu geschlossenen dichten Kurvenzug bilden, so dass im Turbinenbetrieb das Kühlfluid nahezu vollständig durch das Prallkühlelement (22) strömt.

5. Turbine (1) nach einen der Ansprüche 1 bis 4
**dadurch gekennzeichnet,**
**dass** der sich in Einsteckrichtung erstreckende Laufschaufelfuß (19) einen vorderen und einen hinteren Bereich (27) aufweist,
in denen an der Plattformunterseite (25) als geneigte Anlagegleitfläche (31) jeweils ein sich radial nach innen auskragender Steg (28, 29) angeordnet ist, der vom Laufschaufelfuß (19) weg sich mit vermindernder Steghöhe zum Plattformrand (30) hin erstreckt.

6. Turbine (1) nach einen der Ansprüche 1 bis 5
**dadurch gekennzeichnet,**
**dass** entlang des Laufschaufelfußes (19) an der Plattform (23) angrenzend eine schräg zur Längsachse ausgerichtete Ebene als geneigte Anlagegleitfläche (33) angeordnet ist.

7. Turbine (1) nach einen der Ansprüche 1 bis 6
**dadurch gekennzeichnet,**
**dass** die beiden Hälften (20, 21) der Prallkühlelemente (22) jeweils eine Anlagenfläche (33) umfassen, die der gegenüberliegenden Hälfte (21, 20) zugewandt ist und unter Fliehkrafteinwirkung dicht aneinander liegen.

8. Laufschaufel (13), die entlang einer Längssachse (14) einen Laufschaufelfuß (19), eine sich quer zur Längsachse (14) erstreckende Plattform (23) und einen Flügel (24) aufweist,
mit zumindest einem an der dem Laufschaufelfuß (19) zugewandten Plattformunterseite (25) angeordneten Prallkühlelement (22) zur Plattformkühlung
**dadurch gekennzeichnet,**
**dass** das Prallkühlelement (22) zumindest eine beweglich Hälfte (20, 21) umfasst.

9. Laufschaufel (13) nach Anspruch 8,
**dadurch gekennzeichnet,**
**dass** beiderseits des Laufschaufelfußes (19) jeweils eine bewegliche Hälfte (20, 21) angeordnet ist.

10. Laufschaufel (13) nach Anspruch 8 oder 9,
**dadurch gekennzeichnet,**
**dass** an der dem Laufschaufelfuß (19) zugewandten Plattformunterseite (25) und/oder am Laufschaufelfuß (19) geneigte Anlagegleitflächen (31, 33) und an der Hälfte (20, 21) Gleitmittel (32) angeordnet sind,
wobei unter Fliehkrafteinwirkung die Gleitmittel (32) an den Anlagengleitflächen (31, 33) dicht anliegen.

11. Laufschaufel (13) nach Anspruch 8, 9 oder 10
**dadurch gekennzeichnet,**
**dass** die Neigung der Anlagegleitflächen (31, 33) derartig ist, dass unter Fliehkrafteinwirkung die Hälfte (20, 21) von Laufschaufelfuß (19) weg strebt.
